# EUROPEAN PATENT SPECIFICATION

(11) **EP 3 763 563 B1**
(45) Date of publication and mention of the grant of the patent: **26.10.2022**
(21) Application number: 19214842.7
(22) Date of filing: 10.12.2019
(51) Int. Cl.: B60N 2/28

(54) **SEAT LYING ADJUSTMENT MECHANISM AND CHILD SAFETY SEAT**
SITZLIEGEVERSTELLMECHANISMUS UND KINDERSICHERHEITSSITZ
MÉCANISME DE RÉGLAGE DE SIÈGE ET SIÈGE DE SÉCURITÉ ENFANT

(30) Priority: 11.07.2019 CN 201921078938 U
(43) Date of publication of application: 13.01.2021
(73) Proprietor: Zhejiang Boan Mother and Child Products Co., Ltd., Wenzhou City, Zhejiang 325204 (CN)
(72) Inventor: CHI, Ruiwei, Wenzhou City, Zhejiang 325204 (CN); XIAO, Gangsheng, Wenzhou City, Zhejiang 325204 (CN); LIU, Yunzhou, Wenzhou City, Zhejiang 325204 (CN)
(74) Representative: Ipside

(56) References cited:
- EP-A1- 0 853 018
- CN-U- 209 063 936

## Description

### Technical Field

The present invention relates to the field of child safety seats, and more specifically relates to a child safety seat including a seat lying adjustment mechanism.

### Background of the Invention

As people's safety awareness increases, people choose to mount a child safety seat on a car seat to reduce the impact on a child and limit the child's body movement in the event of a car collision or a sudden deceleration, thereby reducing the damage and potential harm to a child and ensuring the child's safety.

The existing child safety seat is designed either as a prone configuration mounted in a facing-backward manner suitable for a baby, or as an upright configuration mounted in a facing-forward manner suitable for an older child, which requires many families to purchase both an infancy (prone configuration) safety seat and a childhood (upright configuration) safety seat respectively, resulting in increased household expenses. Document CN 209 063 936 U discloses a child safety seat, which comprises a cushion and a backrest plate which are hinged to each other, a seat body for accommodating the cushion and the backrest plate, and a seat lying adjustment mechanism for adjusting a cushion and a backrest plate which are hinged to each other.

### Summary of the Invention

Based on the above problem described in the background, the present invention is to provide a child safety seat including a seat lying adjustment mechanism, which can realize a mutual adjustment between an upright state and a lying state of the safety seat, and solve the defect of the safety seat of the prior art not being adjustable.

In order to achieve the above objectives, the technical solution provided by the present invention is as defined in the appended claims.

Compared with the prior art, the present invention has the following advantages:
1. The present invention can realize an adjustment of an angle between a cushion and a backrest plate by a lying adjustment structure, thereby realizing a mutual conversion between an upright state and a lying state of a child safety seat, and realizing the function of a multi-purpose seat.
2. When adjusting in the present invention, a handle is first turned to be disengaged from a block, and then the handle is pulled along an extension direction of the backrest plate to drive the backrest plate to move along a sliding groove, thereby changing the angle between the cushion and the backrest plate, and facilitating the operation.

### Brief description of the Drawings

In order to more clearly explain the technical solutions in the embodiments of the present invention, the drawings required to be used in the description of the embodiments will be briefly described below.
FIG. 1 is an exploded view of a child safety seat in an embodiment of the present invention;
FIG. 2 is a schematic view showing structures of a first sliding seat and a second sliding seat in the embodiment of the present invention;
FIG. 3 is a schematic view showing an external structure of the child safety seat in the embodiment of the present invention;
FIG. 4 is a schematic view showing a structure of a handle in the embodiment of the present invention;
FIG. 5 is a front cross-sectional view when the child safety seat in the embodiment of the present invention is in a first gear position;
FIG. 6 is a partial enlarged view of part A in FIG. 5;
FIG. 7 is a side view when the child safety seat in the embodiment of the present invention is in the first gear position;
FIG. 8 is a front cross-sectional view when the child safety seat in the embodiment of the present invention is in a second gear position;
FIG. 9 is a partial enlarged view of part B in FIG. 8;
FIG. 10 is a side view when the child safety seat in the embodiment of the present invention is in the second gear position.

### Detailed Description of Embodiments

The objectives, technical solutions, and advantages in the embodiments of the present utility model will be clearly and completely described below with reference to the accompanying drawings in the embodiments of the present invention. Obviously, the described embodiments are a part of the embodiments of the present invention, but not all of the embodiments. All the other embodiments obtained by those skilled in the art based on the embodiments of the present invention without creative efforts are within the scope of the present invention.

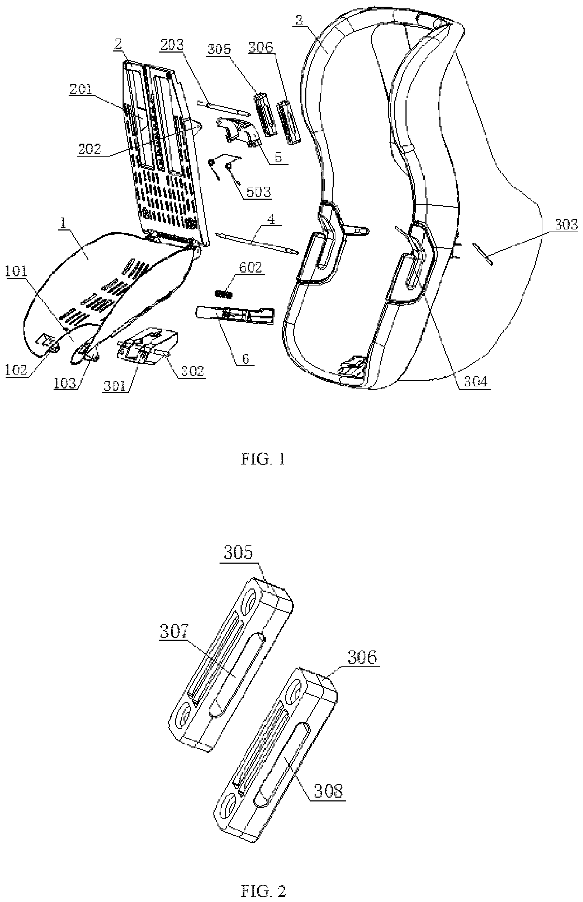

The child safety seat in the prior art is designed either as a prone configuration mounted in a facing-backward manner suitable for a baby, or as an upright configuration mounted in a facing-forward manner suitable for an older child. Therefore, the present embodiment provides a child safety seat which can realize a mutual adjustment between an upright state and a lying state. As shown in FIG. 1, the child safety seat of the present embodiment includes the cushion 1 and the backrest plate 2 which are hinged to each other, the seat body 3 for accommodating the cushion 1 and the backrest plate 2, and a seat lying adjustment mechanism.

In order to achieve an adjustment of the angle between the cushion 1 and the backrest plate 2 by the seat lying adjustment mechanism, the cushion 1 and the backrest plate 2 are movably connected in the seat body 3. In the present embodiment, as shown in FIG. 1, one side away from the hinge position with the backrest plate 2 of the cushion 1 is turnably connected to the seat body 3. Specifically, the cushion mounting base 301 is disposed inside the front side of the seat body 3, the cushion connecting rod 302 is provided at the cushion mounting base 301 so as to horizontally pass through the cushion mounting base 301, and the notch 101 is disposed at the position corresponding to the cushion mounting base 301 on the cushion 1. On a lower surface of the cushion 1 and the outer edge of the notch 101, the first connecting base 102 and the second connecting base 103 are symmetrically disposed with the central axis of the notch 101 as an axis. The first connecting base 102 and the second connecting base 103 are respectively provided with a through hole through which the cushion connecting rod 302 passes. One end of the cushion connecting rod 302 passes through the first connecting base 102, and the other end passes through the second connecting base 103, thereby realizing a turnable connection between the cushion 1 and the seat body 3. It should be noted that the manner of realizing the turnable connection between the cushion 1 and the seat body 3 is not limited to the specific solution given in the present embodiment.

In the present embodiment, as shown in FIG. 1, the cushion 1 and the backrest plate 2 are hinged by the backrest plate connecting rod 4. The backrest plate connecting rod 4 passes through the backrest plate 2 and the cushion 1 in order, and both ends of the backrest plate connecting rod 4 horizontally extend out of the seat body 3. Both sides of the seat body 3 are respectively provided with the chute 303 for an end of the backrest plate connecting rod 4 to pass through and move upward and downward. Top ends on both sides of the seat body 3 are respectively provided with the safety belt guiding groove 304, and the safety belt guiding groove 304 is disposed above the chute 303.

In the present embodiment, as shown in FIG. 1, one side away from the hinge position with the cushion 1 of the backrest plate 2 is slidably connected to the seat body 3. Specifically, the first connecting lug 201 and the second connecting lug 202 are symmetrically disposed on a back side of the backrest plate 2. The first sliding base 305 and the second sliding base 306 are disposed on an inner surface on a back side of the seat body 3. As shown in FIG. 2, the first sliding groove 307 is disposed on the first sliding base 305 along a length extension direction of the backrest plate 2, the second sliding groove 308 is disposed on the second sliding base 306 along the extension direction of the backrest plate 2, and the first sliding base 305 and the second sliding base 306 have identical structures. As shown in FIG. 1, the backrest sliding rod 203 is provided at the first connecting lug 201 and the second connecting lug 202 so as to pass through the first connecting lug 201 and the second connecting lug 202. One end of the backrest sliding rod 203 is slidably connected to the first sliding groove 307, and the other end is slidably connected to the second sliding groove 308.

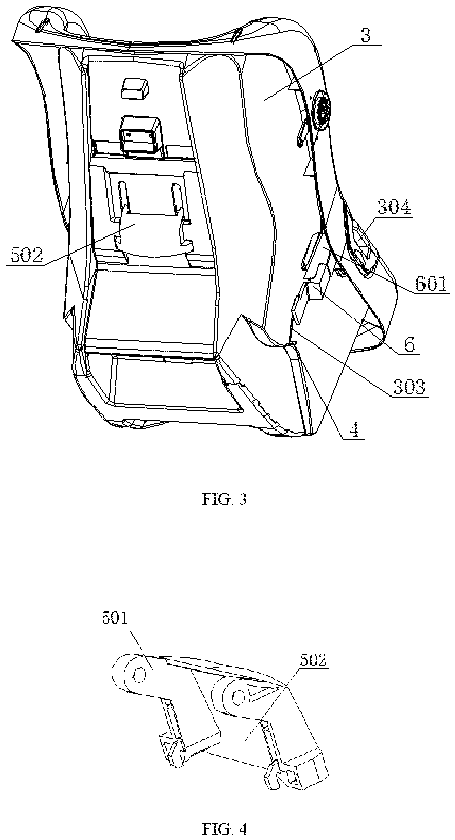

In the present embodiment, as shown in FIGS. 1 and 3, the seat lying adjustment mechanism includes a backrest plate pulling assembly and a safety belt guiding assembly, and the backrest plate pulling assembly includes the handle 5. As shown in FIG. 4, the handle 5 includes the connecting portion 501 and the operating portion 502. As shown in FIG. 1, the connecting portion 501 is hinged to the backrest plate 2 by the torsion spring 503. Specifically, both the connecting portion 501 and the torsion spring 503 pass through the backrest sliding rod 203. As shown in FIG. 3, the seat body 3 is provided with a through groove for the connecting portion 501 to pass through to be hinged to the backrest plate 2, and the operating portion 502 is located at an outer side of the seat body 3 for the user to operate.

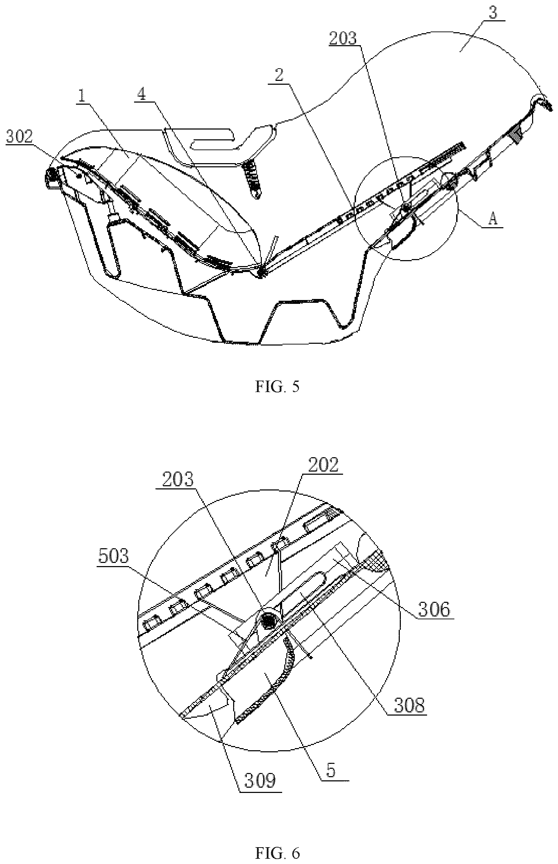

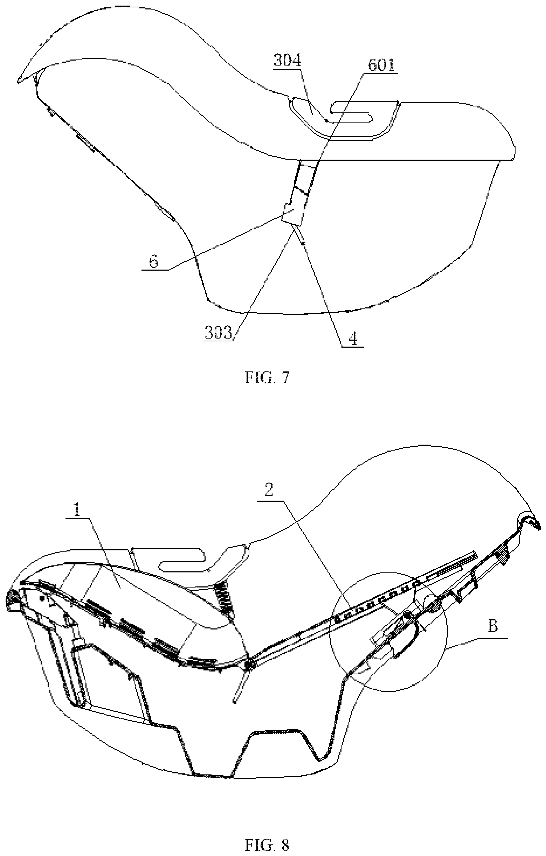

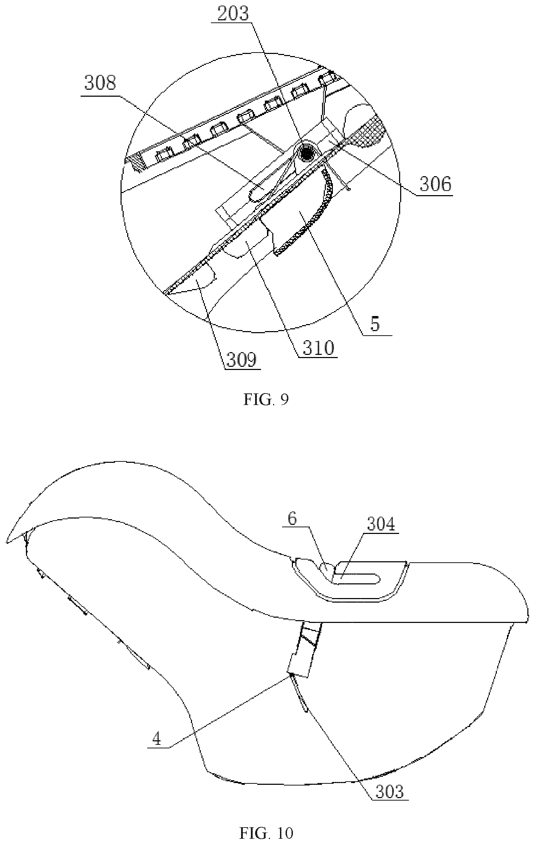

In the present embodiment, as shown in FIGS. 5, 6, 8, and 9, the outer side of the seat body 3 is further provided with a block for restraining the handle 5 in a moving position. In the present embodiment, an angle between the cushion 1 and the backrest plate 2 is adjusted within two gear positions. In the first gear position, as shown in FIG. 5, the angle between the cushion 1 and the backrest plate 2 is 100°, and in the second gear position, as shown in FIG. 8, the angle between the cushion 1 and the backrest plate 2 is 140°. Correspondingly, there are two blocks, i.e., the first block 309 and the second block 310, as shown in FIGS. 6 and 9. As shown in FIG. 6, when the cushion 1 and the backrest plate 2 are in the first gear, the handle 5 is engaged on the first block 309, and at this time, the backrest sliding rod 203 is located at a bottom end of the first sliding groove 307 and the second sliding groove 308. When it is necessary to adjust to the second gear position, the handle 5 is first turned, the handle 5 is then pulled, as shown in FIG. 9, the handle 5 pulls the backrest plate 2 to move to the top end along the sliding groove, and the handle 5 is finally loosened. Under an action of the torsion spring 503, the handle 5 is restored and attached to the outer surface of the seat body 3. At this time, a bottom end of the handle 5 abuts against the second block 310, thereby restraining the position of the handle 5 to prevent it from sliding down. As shown in FIGS. 7 and 10, when the handle 5 drives the backrest plate 2 to move from the first gear position to the second gear position, the backrest plate connecting rod 4 moves obliquely upward along the chute 303.

In the present embodiment, as shown in FIGS. 7 and 10, the safety belt guiding assembly includes the latch 6 disposed on the seat body 3 and disposed adjacent to the chute 303. As shown in FIG. 7, when the cushion 1 and the backrest plate 2 are in the first gear position, the latch 6 can cover the upper half of the chute 303. At this time, the backrest plate connecting rod 4 is located at a bottom of the chute 303, and the backrest plate connecting rod 4 is not in contact with the latch 6. When the handle 5 pulls the backrest plate 2 to move to the second gear position, as shown in FIG. 10, the backrest plate connecting rod 4 moves upward along the chute 303 and is in contact with the bottom end of the latch 6. When the backrest plate connecting rod 4 moves to the top end of the chute 303, the latch 6 is pushed to move upward to block the safety belt guiding groove 304 on the seat body 3, so that a safety belt cannot penetrate into the safety belt guiding groove 304. Specifically, as shown in FIGS. 3, 7, and 10, the seat body 3 is provided with the latch barrel 601 for the latch 6 to move along its axial direction, and the spring 602 passes through the latch 6. When the cushion 1 and the backrest plate 2 are adjusted from the second gear position to the first gear position, the backrest plate connecting rod 4 moves from the top end to the bottom end of the chute 303. At this time, under an action of the spring 602, the latch can automatically restore to the initial state.

It should be noted that the number of gear positions and the angle between the cushion 1 and the backrest plate 2 in each gear position which are set in the present embodiment can be adjusted according to specific conditions, and are not limited to the specific example given in the present embodiment.

It should be noted that several variations and modifications may be made by those skilled in the art without departing from the inventive concept of the present invention, as long as they fall within the scope defined by the claims.

## Claims

1. A child safety seat, comprising a cushion (1) and a backrest plate (2) which are hinged to each other, a seat body (3) for accommodating the cushion (1) and the backrest plate (2), and a seat lying adjustment mechanism, **characterized in that**
the seat lying adjustment mechanism is configured for adjusting the cushion (1) and the backrest plate (2), wherein one side away from a hinge position with the backrest plate of the cushion is fixed, the seat lying adjustment mechanism comprises a backrest plate pulling assembly and a safety belt guiding assembly,
the backrest plate pulling assembly comprises: a handle (5) for driving the backrest plate to move along a length extension direction of the backrest plate, so that the hinge position of the cushion and the backrest plate moves obliquely upward and downward, and a block for restraining the handle in a moving position,
the safety belt guiding assembly comprises a latch (6) disposed adjacent to the hinge position of the cushion and the backrest plate, so that the latch is driven to move upward and downward when the hinge position of the cushion and the backrest plate moves obliquely upward and downward.

2. The child safety seat according to claim 1, wherein the cushion (1) and the backrest plate (2) are accommodated in a seat body (3) with a hollow structure, one side away from the hinge position with the backrest plate of the cushion is turnably connected to the seat body (3), one side away from the hinge position with the cushion of the backrest plate is slidably connected to the seat body, the handle (5) is hinged to the backrest plate (2) by a torsion spring (503), and the block is disposed on the seat body (3).

3. The child safety seat according to claim 2, wherein a connecting lug is disposed on a back side of the backrest plate (2), a sliding base is disposed on the seat body (3), a sliding groove is disposed on the sliding base along the length extension direction of the backrest plate, the connecting lug is slidably connected to the sliding groove by a backrest sliding rod (203);
the handle (5) and the torsion spring (503) pass through the backrest sliding rod (203) to pull the backrest plate to move along the sliding groove.

4. The child safety seat according to claim 2, wherein the cushion (1) and the backrest plate (2) are hinged by a backrest plate connecting rod (4), both ends of the backrest plate connecting rod (4) horizontally extend out of the seat body (3), and both sides of the seat body are respectively provided with a chute (303) for an end of the backrest plate connecting rod to pass through and move upward and downward,
the latch (6) is disposed on the seat body (3) and disposed adjacent to the chute (303), so that the latch (6) is driven to move upward and downward when the backrest plate connecting rod (4) moves along the chute (303).

5. The child safety seat according to claim 4, wherein the seat body (3) is provided with a safety belt guiding groove (304), and the safety belt guiding groove (304) is disposed above the latch (6), so that the latch (6) can block the safety belt guiding groove (304) when moving upward.

6. The child safety seat according to claim 4, wherein the seat body (3) is provided with a latch barrel (601) for the latch (6) to move along an axial direction of the latch barrel (601), and a spring (602) passes through the latch (6).

7. The child safety seat according to any one of claims 1 to 6, wherein the cushion (1) and the backrest plate (2) are movably connected in the seat body (3).

8. The child safety seat according to claim 7, wherein one side away from the hinge position with the backrest plate of the cushion is turnably connected to the seat body, one side away from the hinge position with the cushion of the backrest plate is slidably connected to the seat body,
the cushion (1) and the backrest plate (2) are hinged by a backrest plate connecting rod (4), both ends of the backrest plate connecting rod horizontally extend to the seat body (3), and both sides of the seat body are respectively provided with a chute (303) for the end of the backrest plate connecting rod to pass through and move upward and downward.

9. The child safety seat according to claim 8, wherein a cushion mounting base (301) is disposed on the seat body (3), a cushion connecting rod (302) horizontally passes through the cushion mounting base (301); two connecting bases are symmetrically disposed on a lower surface of the cushion (1), two ends of the cushion connecting rod (302) pass through corresponding connecting bases respectively, so that the cushion (1) and the seat body (3) are turnably connected.

## Patentansprüche

1. Kindersicherheitssitz, umfassend ein Sitzkissen (1) und eine Rückenlehnenplatte (2), die miteinander scharniert sind, einen Sitzkörper (3) zum Aufnehmen des Sitzkissens (1) und der Rückenlehnenplatte (2) und einen Sitzliegeverstellmechanismus, **dadurch gekennzeichnet, dass**
der Sitzliegeverstellmechanismus konfiguriert ist zum Verstellen des Sitzkissens (1) und der Rückenlehnenplatte (2), wobei eine Seite entfernt von einer Scharnierposition mit der Rückenlehnenplatte des Sitzkissens fixiert ist, wobei der Sitzliegeverstellmechanismus eine Rückenlehnenplattenzugbaugruppe und eine Sicherheitsgurtführungsbaugruppe umfasst,
die Rückenlehnenplattenzugbaugruppe umfasst: Einen Griff (5) zum Antreiben der Rückenlehnenplatte, sich entlang einer Längenausdehnungsrichtung der Rückenlehnenplatte zu bewegen, sodass sich die Scharnierposition des Sitzkissens und der Rückenlehnenplatte schräg nach oben und nach unten bewegt, und einen Block zum Festhalten des Griffs in einer Bewegungsposition,
die Sicherheitsgurtführungsbaugruppe einen Riegel (6) umfasst, der neben der Scharnierposition des Sitzkissens und der Rückenlehnenplatte angeordnet ist, sodass der Riegel angetrieben wird, sich nach oben und nach unten zu bewegen, wenn sich die Scharnierposition des Sitzkissens und der Rückenlehnenplatte schräg nach oben und nach unten bewegt.

2. Kindersicherheitssitz nach Anspruch 1, wobei das Sitzkissen (1) und die Rückenlehnenplatte (2) in einem Sitzkörper (3) mit einer hohlen Struktur untergebracht sind, eine Seite entfernt von der Scharnierposition mit der Rückenlehnenplatte des Sitzkissens drehbar mit dem Sitzkörper (3) verbunden ist, eine Seite entfernt von der Scharnierposition mit dem Sitzkissen der Rückenlehnenplatte schiebbar mit dem Sitzkörper verbunden ist, der Griff (5) mittels einer Torsionsfeder (503) mit der Rückenlehnenplatte (2) scharniert ist und der Block am Sitzkörper (3) angeordnet ist.

3. Kindersicherheitssitz nach Anspruch 2, wobei ein Verbindungsansatz an einer Rückseite der Rückenlehnenplatte (2) angeordnet ist, eine Schiebebasis am Sitzkörper (3) angeordnet ist, eine Schiebenut an der Schiebebasis entlang der Längenausdehnungsrichtung der Rückenlehnenplatte angeordnet ist, der Verbindungsansatz mittels einer Rückenlehnenschiebestange (203) schiebbar mit der Schiebenut verbunden ist;
wobei der Griff (5) und die Torsionsfeder (503) durch die Rückenlehnenschiebestange (203) laufen, um die Rückenlehnenplatte zu ziehen, damit sie sich entlang der Schiebenut bewegt.

4. Kindersicherheitssitz nach Anspruch 2, wobei das Sitzkissen (1) und die Rückenlehnenplatte (2) mittels einer Rückenlehnenplattenverbindungsstange (4) scharniert sind, sich beide Enden der Rückenlehnenplattenverbindungsstange (4) horizontal aus dem Sitzkörper (3) erstrecken und beide Seiten des Sitzkörpers jeweils mit einer Rinne (303) versehen sind, durch die ein Ende der Rückenlehnenplattenverbindungsstange läuft und sich nach oben und nach unten bewegt,
wobei der Riegel (6) an dem Sitzköper (3) angeordnet ist und neben der Rinne (303) angeordnet ist, sodass der Riegel (6) angetrieben wird, sich nach oben und nach unten zu bewegen, wenn sich die Rückenlehnenplattenverbindungsstange (4) entlang der Rinne (303) bewegt.

5. Kindersicherheitssitz nach Anspruch 4, wobei der Sitzkörper (3) mit einer Sicherheitsgurtführungsnut (304) versehen ist und die Sicherheitsgurtführungsnut (304) über dem Riegel (6) angeordnet ist, sodass der Riegel (6) die Sicherheitsgurtführungsnut (304) bei einer Bewegung nach oben blockieren kann.

6. Kindersicherheitssitz nach Anspruch 4, wobei der Sitzkörper (3) mit einem Riegelschaft (601) versehen ist, damit sich der Riegel (6) entlang einer axialen Richtung des Riegelschafts (601) bewegt, und eine Feder (602) durch den Riegel (6) läuft.

7. Kindersicherheitssitz nach einem der Ansprüche 1 bis 6, wobei das Sitzkissen (1) und die Rückenlehnenplatte (2) beweglich im Sitzkörper (3) verbunden sind.

8. Kindersicherheitssitz nach Anspruch 7, wobei eine Seite entfernt von der Scharnierposition mit der Rückenlehnenplatte des Sitzkissens drehbar mit dem Sitzkörper verbunden ist, eine Seite entfernt von der Scharnierposition mit dem Sitzkissen der Rückenlehnenplatte schiebbar mit dem Sitzkörper verbunden ist,
wobei das Sitzkissen (1) und die Rückenlehnenplatte (2) mittels einer Rückenlehnenplattenverbindungsstange (4) scharniert sind, sich beide Enden der Rückenlehnenplattenverbindungsstange horizontal zu dem Sitzkörper (3) erstrecken und beide Seiten des Sitzkörpers jeweils mit einer Rinne (303) versehen sind, durch die das Ende der Rückenlehnenplattenverbindungsstange läuft und sich nach oben und nach unten bewegt.

9. Kindersicherheitssitz nach Anspruch 8, wobei eine Sitzkissenmontagebasis (301) am Sitzkörper (3) angeordnet ist, eine Sitzkissenverbindungsstange (302) horizontal durch die Sitzkissenmontagebasis (301) läuft; wobei zwei Verbindungsbasen symmetrisch an einer unteren Oberfläche des Sitzkissens (1) angeordnet sind, zwei Enden der Sitzkissenverbindungsstange (302) jeweils durch entsprechende Verbindungsbasen laufen, sodass das Sitzkissen (1) und der Sitzkörper (3) drehbar verbunden sind.

## Revendications

1. Siège de sécurité enfant, comprenant un coussin (1) et une plaque de dossier (2) qui s'articulent l'un vis-à-vis de l'autre, un corps de siège (3) destiné à recevoir le coussin (1) et la plaque de dossier (2), et un mécanisme de réglage de couchage de siège, **caractérisé en ce que** le mécanisme de réglage de couchage de siège est configuré pour régler le coussin (1) et la plaque de dossier (2), dans lequel un côté éloigné d'une position d'articulation avec la plaque de dossier du coussin est fixe, le mécanisme de réglage de couchage de siège comprend un ensemble de traction de plaque de dossier et un ensemble de guidage de ceinture de sécurité, l'ensemble de traction de plaque de dossier comprend :
une poignée (5) pour entraîner la plaque de dossier à se déplacer le long d'une direction d'extension de longueur de la plaque de dossier, de telle sorte que la position d'articulation du coussin et de la plaque de dossier se déplace obliquement vers le haut et vers le bas, et un bloc pour retenir la poignée dans une position de déplacement,
l'ensemble de guidage de ceinture de sécurité comprend un loquet (6) disposé de manière adjacente à la position d'articulation du coussin et de la plaque de dossier, de sorte que le loquet est entraîné à se déplacer vers le haut et vers le bas lorsque la position d'articulation du coussin et de la plaque de dossier se déplace obliquement vers le haut et vers le bas.

2. Siège de sécurité enfant selon la revendication 1, dans lequel le coussin (1) et la plaque de dossier (2) sont reçus dans un corps de siège (3) avec une structure creuse, un côté éloigné de la position d'articulation avec la plaque de dossier du coussin est relié de manière rotative au corps de siège (3), un côté éloigné de la position d'articulation avec le coussin de la plaque de dossier est relié de manière coulissante au corps de siège, la poignée (5) s'articule sur la plaque de dossier (2) par un ressort de torsion (503), et le bloc est disposé sur le corps de siège (3).

3. Siège de sécurité enfant selon la revendication 2, dans lequel une patte de liaison est disposée sur un côté arrière de la plaque de dossier (2), une base de coulissement est disposée sur le corps de siège (3), une rainure de coulissement est disposée sur la base de coulissement le long de la direction d'extension de longueur de la plaque de dossier, la patte de liaison est reliée de manière coulissante à la rainure de coulissement par une tige de coulissement de dossier (203) ;
la poignée (5) et le ressort de torsion (503) passent à travers la tige de coulissement de dossier (203) pour tirer la plaque de dossier pour qu'elle se déplace le long de la rainure de coulissement.

4. Siège de sécurité enfant selon la revendication 2, dans lequel le coussin (1) et la plaque de dossier (2) sont articulés par une tige de liaison de plaque de dossier (4), les deux extrémités de la tige de liaison de plaque de dossier (4) s'étendent horizontalement à l'extérieur du corps de siège (3), et les deux côtés du corps de siège sont respectivement dotés d'une glissière (303) pour qu'une extrémité de la tige de liaison de plaque de dossier passe à travers et se déplace vers le haut et vers le bas,
le loquet (6) est disposé sur le corps de siège (3) et disposé de manière adjacente à la glissière (303), de telle sorte que le loquet (6) est entraîné pour se déplacer vers le haut et vers le bas lorsque la tige de liaison de plaque de dossier (4) se déplace le long de la glissière (303).

5. Siège de sécurité enfant selon la revendication 4, dans lequel le corps de siège (3) est doté d'une rainure de guidage de ceinture de sécurité (304), et la rainure de guidage de ceinture de sécurité (304) est disposée au-dessus du loquet (6), de telle sorte que le loquet (6) peut bloquer la rainure de guidage de ceinture de sécurité (304) lorsqu'il se déplace vers le haut.

6. Siège de sécurité enfant selon la revendication 4, dans lequel le corps de siège (3) est doté d'un cylindre de loquet (601) pour que le loquet (6) se déplace le long d'une direction axiale du cylindre de loquet (601), et un ressort (602) traverse le loquet (6).

7. Siège de sécurité enfant selon l'une quelconque des revendications 1 à 6, dans lequel le coussin (1) et la plaque de dossier (2) sont reliés de manière mobile dans le corps de siège (3).

8. Siège de sécurité enfant selon la revendication 7, dans lequel un côté éloigné de la position d'articulation avec la plaque de dossier du coussin est relié de manière rotative au corps de siège, un côté éloigné de la position d'articulation avec le coussin de la plaque de dossier est relié de manière coulissante au corps de siège,
le coussin (1) et la plaque de dossier (2) sont articulés par une tige de liaison de plaque de dossier (4), les deux extrémités de la tige de liaison de plaque de dossier s'étendent horizontalement jusqu'au corps de siège (3), et les deux côtés du corps de siège sont respectivement dotés d'une glissière (303) pour que l'extrémité de la tige de liaison de plaque de dossier passe à travers et se déplace vers le haut et vers le bas.

9. Siège de sécurité enfant selon la revendication 8, dans lequel une base de montage de coussin (301) est disposée sur le corps de siège (3), une tige de liaison de coussin (302) traverse horizontalement la base de montage de coussin (301) ; deux bases de liaison sont disposées de manière symétrique sur une surface inférieure du coussin (1), deux extrémités de la tige de liaison de coussin (302) traversent des bases de liaison correspondantes respectivement, de telle sorte que le coussin (1) et le corps de siège (3) sont reliés de manière rotative.
